(19) Europäisches Patentamt

European Patent Office

Office européen des brevets

(11) **EP 0 588 102 B1**

(12) **FASCICULE DE BREVET EUROPEEN**

(45) Date de publication et mention
de la délivrance du brevet:
**23.06.1999  Bulletin 1999/25**

(51) Int. Cl.⁶: **A23K 1/16**, A23K 1/18

(21) Numéro de dépôt: 93113381.3

(22) Date de dépôt: 21.08.1993

(54) **Procédé de préparation d'aliments pour animaux ruminants**

Verfahren zur Herstellung von Futter für Wiederkäuer

Process for preparing ruminant feed

(84) Etats contractants désignés:
**AT DE DK ES GB NL**

(30) Priorité: **28.08.1992 CH 269092**

(43) Date de publication de la demande:
**23.03.1994  Bulletin 1994/12**

(73) Titulaires:
• **CRINA S.A.**
  **CH-1196 Gland (CH)**
• **C.O.F.N.A. S.A.**
  **F-37018 Tours (FR)**

(72) Inventeur:
**Borgida, Louis-Patrick**
**37100 Tours (FR)**

(74) Mandataire: **Micheli & Cie**
**Rue de Genève 122,**
**Case Postale 61**
**1226 Genève-Thonex (CH)**

(56) Documents cités:
DD-A- 92 852         FR-A- 2 454 765
FR-A- 2 559 036      FR-A- 2 563 977
US-A- 4 103 003      US-A- 4 800 088

## Description

La présente invention se rapporte à un procédé de préparation d'aliments pour animaux ruminants, et plus particulièrement d'aliments contenant des protéines d'origine végétale protégées contre leur dégradation par la microflore du pré-estomac ou rumen. L'invention concerne également les aliments obtenus par ce procédé.

On sait que la microflore des pré-estomacs des animaux ruminants est susceptible de désaminer les protéines ingérées par ces animaux, créant ainsi une diminution de l'azote protéique disponible. Plusieurs procédés ont déjà été proposés pour protéger les protéines alimentaires contre leur dégradation microbienne ruminale. Le document FR-A-2.554.323 par example décrit des produits contenant des protéines tannées par traitement au formaldéhyde. De plus, les documents EP-A-0.181.990 et EP-A-0.421.879 décrivent des méthodes pour protéger les protéines végétales par utilisation de sels de zinc, respectivement par un traitement thermique.

On connaît également, plus particulièrement du document FR-A-2.454.765, un procédé de traitement de protéines d'origine végétale pour la détoxification et la modification du goût de ces produits, qui implique l'utilisation d'un catalyseur oxydant (de 0,5 à 5% en poids) en présence d'un hydroxyde alcalin ou alcalinoterreux, par exemple de l'hydroxyde de sodium.

Or, ces procédés connus présentent tous des inconvénients, par exemple dus à la présence de produits toxiques dont l'utilisation est soumise à des restrictions de plus en plus strictes (formaldéhyde, sels de zinc, hydroxyde de sodium, etc.) ou bien à cause de la difficulté de mise en oeuvre et de la relativement faible efficacité du procédé lui-même (traitement thermique).

Le but de la présente invention consiste donc à remédier aux inconvénients des procédés connus et à fournir un nouveau procédé visant à protéger efficacement les protéines contre leur dégradation dans le pré-estomac des ruminants pour la préparation d'aliments non toxiques pour ces animaux. Le procédé selon l'invention, qui vise à atteindre le but précité, est caractérisé en ce qu'on traite les matières protéiques d'origine végétale avec de 0,1 à 0,5% en poids d'un mélange de catalyseurs oxydants, en présence de 1 à 5% en poids d'oxyde de calcium, puis qu'on conditionne le produit ainsi obtenu.

De plus, l'invention a également pour objet les aliments pour animaux ruminants contenant des protéines d'origine végétale protégées de leur dégradation au niveau du rumen par le procédé ci-dessus.

On a en effet pu constater que des catalyseurs oxydants, notamment ceux à base de sels de cuivre, de fer, de manganèse, de cobalt, de chrome et/ou de nickel, ainsi que ceux à base de sulfate et/ou persulfate de sodium ou de potassium, sont capables de protéger les protéines végétales de leur dégradation par la microflore du rumen.

De plus, l'action du mélange oxydant est améliorée par la présence d'oxyde de calcium ajouté à raison de 1 à 5% poids. De préférence, le traitement avec ledit mélange est effectué à une température d'environ 80 à 100°C ayant conditionnement, par exemple en injectant de la vapeur sèche dans la masse du produit au cours de son mélange.

Le traitement des protéines végétales a lieu de préférence dans des conditions d'humidité normales pour les ingrédients employés en alimentation animale, c'est-à-dire entre environ 8 et 20%, et le procédé selon l'invention peut être mis en oeuvre avec les équipements classiques d'une fabrique d'aliments pour bétail.

L'invention sera maintenant illustrée en référence aux exemples qui suivent.

Mélange de catalyseurs oxydants

Il peut présenter la composition suivante :

| | |
|---|---|
| $Fe_2O_3$ | 5 - 10 % poids |
| $CuSO_4.5H_2O$ | 5 - 20 |
| $KMnO_4$ | 10 - 40 |
| $K_2Cr_2O_7$ | 5 - 20 |
| $Ni_2O_3$ | 0 - 4 |
| $Na_2SO_4$ | 30 - 50 |
| $Na_2S_2O_8$ | 2 - 6 |
| $Na_2CO_3$ | 20 - 40 |
| $Ca_3(Po_4)_2$ | 10 - 20 |

Exemple 1

Dans une mélangeuse horizontale, on mélange intimement les matières protéiques d'origine végétale, préalablement finement broyées, le mélange de catalyseurs oxydants, ainsi que l'oxyde alcalino-terreux, selon les quantités suivantes :

| Tourteaux de colza | 815 Kg |
|---|---|
| Tourteaux de tournesol Mat. prot. vég. | 50 |
| Tourteaux de soja | 50 |
| Mélange oxydant * | 1,5 |
| Oxyde de Ca | 30 |
| [Eau (vapeur)] | [90] |

* dont la composition peut être la suivante : 5% $Fe_2O_3$, 5% $CuSO_4$ $5H_2O$, 12% $KMnO_4$, 8% $K_2Cr_2O_7$, 30% $Na_2SO_4$, 3% $Na_2S_2O_8$, 25% $Na_2CO_3$ et 12% $Ca_3(Po_4)_2$

Durant l'opération de mélange, dont la durée est de 45 à 48 minutes environ, la température est maintenue à 90°C par injection de vapeur.

Le mélange final est transféré dans un boisseau calorifugé et dans la chambre de conditionnement d'une presse à granuler à filière de 4 mm de diamètre et 60 mm d'épaiseur. Le conditionnement comprend une injection de vapeur pour maintenir ta température supérieure à 90°C. Le mélange est ensuite granulé à travers ta presse, refroidi et séché par un refroidisseur horizontal à air pour doser environ 10% d'humidité.

Les tourteaux ainsi traités sont soumis à une mesure in vitro de la "dégradabilité" de leurs protéines et de leurs taux de RDP et d'UDP suivant la technique de simulation de fermentation ruminale in vitro "Rusitec" décrite par CZERKOWSKI et BRECKENRIGE, 1977. Les mêmes tourteaux, mais non traités, servent de témoin.

Les résultats de ces mesures figurent dans le tableau 1 ci-après :

TABLEAU 1

| | Taux de protéine (% MS) | Dégradabilité des protéines (%) | RDP* (% MS) | UDP** (% MS) |
|---|---|---|---|---|
| Tourteaux témoins | 39,4 | 56,3 | 22,2 | 17,2 |
| Tourteaux traités | 37,0 | 22,9 | 8,5 | 28,5 |
| MS = matière sèche | | | | |

* = Rumen Degradable Protein (selon "The nutrient requirements of ruminant livestock - ARC)

** = Undegraded Protein (idem)

Exemple 2

On réalise les trois mélanges suivants selon la procédure décrite dans l'exemple 1, avec les proportions suivantes :

| Tourteau de soja, de colza ou de tournesol | 3.850 Kg |
|---|---|
| Mélange de catalyseurs | 8 Kg |

(suite)

| Oxyde de calcium | 142 Kg |
|---|---|
| [Eau (vapeur)] | [320 Kg] |

Les valeurs PDIA, PDIE, PDIN (PDI = Protéines Digestibles dans l'Intestin, selon "Alimentation des bovins, ovins et caprins, R. Jarrige, 1988, I.N.R.A. - France) mesurées sur les tourteaux respectivement de soja, colza et tournesol permettent de mettre en évidence les améliorations en % mentionnées dans le tableau 2 ci-après :

TABLEAU 2

|  | PDIA | PDIE | PDIN (*) |
|---|---|---|---|
| Tourteau de soja | + 52 | + 32 | + 4 |
| Tourteau de colza | + 126 | + 63 | + 9 |
| Tourteau de tournesol | + 98 | + 52 | - 2 |

(*)
PDIA = protéines digestibles dans l'intestion d'origine alimentaire, c'est-à-dire provenant directement des protéines non dégradées dans le rumen
PDIN = valeur PDI pour un aliment inclus dans une ration déficitaire en azote dégradable
PDIE = valeur PDI pour un aliment inclus dans une ration où l'énergie est le facteur limitant de la sythése microbienne
avec PDIN = PDIA + PDIMN
et PDIE = PDIA + PDIME
(où PDIM = protéines digestibles dans l'intestin d'origine microbienne, synthétisées dans le rumen; chaque aliment est défini par deux valeurs, l'une reflétant la teneur en énergie fermentescible - PDIME -, l'autre celle en azote dégradable - PDIMN -).

Les tourteaux ainsi traités, ainsi que les tourteaux témoins non traités, sont ensuite soumis à une étude in vivo sur vaches suivant la technique originale décrite ci-dessus.

L'étude est réalisée "in situ" sur quatre vaches taries, de race Holstein de 600 Kg de poids vif moyen et canulées au niveau ruminal. Les vaches reçoivent une ration composée, sur la base de la matière sèche (MS), de 60% d'ensilage de maïs plante entière, de 10% de foin de ray grass de 2ème cycle et de 30% de tourteau de soja. Cette ration est distribuée en deux repas égaux à raison de 10 Kg de MS/vache/jour.

Des sachets nylon soudés (de 11 x 6 cm de 46 μ de vide de maille) (BLUTEX T50, TRIPETTE ET RENAUD, PARIS) sont remplis avec 3 g d'aliment afin de respecter un rapport poids/surface d'échange d'environ 25 mg/cm². Les sachets sont attachés à un anneau de plomb plastifié de 800 g et immergés dans le sac ventral du rumen, avant le repas du matin. Pour chaque produit étudié, les cinétiques de dégradation sont établies à l'aide de 7 valeurs obtenues après 0, 2, 4, 7, 17, 24 et 48 heures de séjour dans la panse. Pour chaque point de cinétique et pour chaque aliment, 10 sachets sont préparés (soit au total 280 sachets) et répartis de façon homogène entre les quatre animaux. Le temps 48 h est retenu comme correspondant à une dégradation complète des composés dégradables. Après récupération, les sachets sont immédiatement rincés. Ils sont ensuite congelés puis, après décongélation, lavés en machine et séchés pendant 48 h à 60°C.

Les teneurs en matières sèches (MS), organiques (MO) et azotées totales (MAT) sont déterminées sur chaque aliment et sur les MS résiduelles.

La teneur en MS est déterminée après séchage des échantillons à l'étuve à 105°C pendant 24h. Les matières minérales sont obtenues après calcination complète des échantillons secs à 550°C pendant 12h, la perte de poids observée représentant la teneur en MP (AOAC, 1984).

L'azote total est déterminé selon la méthode de VERDOUW et al. (1977) adaptée au laboratoire. La teneur en MAT est obtenue, par convention, en multipliant la teneur en azote total par le coefficient 6,25.

Le pourcentage de disparition de la MS, de la MO et des MAT, pour chaque temps d'incubation dans le rumen, est calculé à partir des analyses des résidus secs obtenus après incubation dans la panse. Les cinétiques de dégradation "in situ" sont obtenues en utilisant le modèle d'ORSKOV et Mc DONALD (1979).

$$Dg\ (t) = a + b\ (1 - e^{-ct}) \tag{1}$$

où Dg (t) est la dégradabilité au temps t
a est la fraction immédiatement dégradable
b est la fraction insoluble potentiellement dégradable qui disparaît, par unité de temps, à la vitesse c.

La dégradabilité théorique (DT) est estimée à partir de l'équation :

$$DT = a + (bc) / (c + k) \tag{2}$$

où a, b et c sont les paramètres définis dans l'équation (1) et k est le taux de sortie des particules estimé à 6 %/h (VERITE et al., 1987).

La teneur en PDI des matières protéiques étudiées est calculée à partir des équations proposées par VERITE et al. (1987, 1989).

Les résultats obtenus sont réunis dans le tableau 3 :

TABLEAU 3

| Paramètres des équations de dégradabilité, coefficient de détermination et dégradabilité théorique des tourteaux de colza (nombre de répétitions : 280) | | | | | |
|---|---|---|---|---|---|
| | a (%) | b (%) | c (%) | r2 | DT (%) |
| **MS** | | | | | |
| TC témoin | 44,4 | 42,2 | 7,0 | 0,76 | 67,2 |
| TC traité | 34,9 | 32,7 | 6,0 | 0,62 | 51,2 |
| **MO** | | | | | |
| TC témoin | 45,4 | 41,2 | 6,0 | 0,75 | 66,0 |
| TC traité | 33,6 | 33,5 | 6,0 | 0,62 | 50,3 |
| **MAT** | | | | | |
| TC témoin | 45,9 | 46,9 | 8,0 | 0,73 | 72,7 |
| TC traité | 20,4 | 45,7 | 4,0 | 0,57 | 38,7 |

De plus les valeurs PDI de ces tourteaux de colza, exprimées en g/kg MS, sont celles mentionnées sur le tableau 4 ci-dessous;

TABLEAU 4

| | PDIA | PDIE | PDIN |
|---|---|---|---|
| Témoin | 85 | 143 | 235 |
| Traité | 192 (+ 125,9%) | 233 ( +62,9%) | 256 (+ 8,9%) |

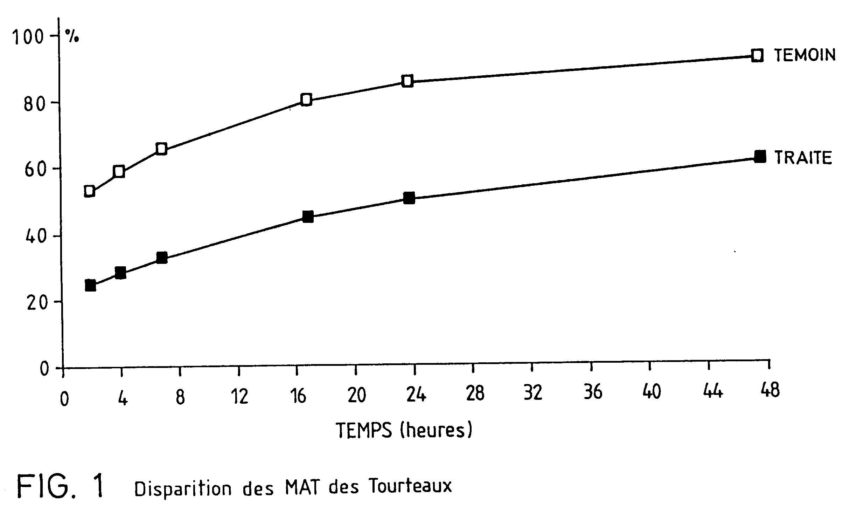

Enfin, la cinétique de la disparation des MAT des tourteaux de colza est représentée sur le graphique de la figure 1.

Exemple 3

Un aliment complémentaire pour vaches laitières est préparé en mélangeant, dans une mélangeuse horizontale, les ingrédients suivants :

| Graine de colza | 800 Kg |
|---|---|
| Tourteaux de colza | 1'500 Kg |
| Tourteaux de soja | 124 Kg |
| Tourteaux de tournesol | 120 Kg |
| Pois fourrager | 300 Kg |
| Huile de palme | 60 Kg |
| Oxyde de calcium | 90 Kg |
| Mélange de catalyseurs | 6 Kg |
| [Eau (vapeur)] | [180 Kg] |

La formulation ci-dessus de l'aliment lui confère les teneurs suivantes :

| Matières protéiques | 24,7 % |
|---|---|
| Matières grasses | 11,8 % |
| Cellulose brute | 8,3 % |
| Matières minérales | 9,7 % |

Après mélange, l'aliment est granulé dans une presse munie d'une filière de 6 mm de diamètre et 100 mm d'épaisseur, en présence de vapeur d'eau à 95°C.

L'aliment ainsi fabriqué, ainsi qu'un aliment témoin de même composition, mais ne contenant pas de mélanges de catalyseurs, sont soumis aux mêmes tests sur vaches fistulées déjà décrits dans l'exemple 2.

Les résultats obtenus sont réunis dans le tableau 5.

TABLEAU 5

| Paramètres des équations de dégradabilité, coefficient de détermination et dégradabilité théorique des aliments complémentaires (nombre de répétitions : 280) | | | | | |
|---|---|---|---|---|---|
|  | a (%) | b (%) | c (%) | r2 | DT (%) |
| **MS** | | | | | |
| Témoin | 51,6 | 36,7 | 8,0 | 0,75 | 72,6 |
| Traité | 45,5 | 36,9 | 5,0 | 0,60 | 62,2 |
| **MO** | | | | | |
| Témoin | 50,3 | 37,4 | 7,0 | 0,65 | 70,3 |
| Traité | 45,7 | 36,0 | 6,0 | 0,62 | 65,3 |
| **MAT** | | | | | |
| Témoin | 52,1 | 40,9 | 11,0 | 0,70 | 78,6 |
| Traité | 38,8 | 40,9 | 4,0 | 0,62 | 55,1 |

De plus, les valeurs PDI des deux aliments exprimées en g/kg MS, sont celles mentionnées sur le tableau 6

6

ci-après :

TABLEAU 6

| | PDIA | PDIE | PDIN |
|---|---|---|---|
| Témoin | 53 | 106 | 191 |
| Traité | 113 (+ 113,2 %) | 161 (+ 51,9 %) | 191 (0 %) |

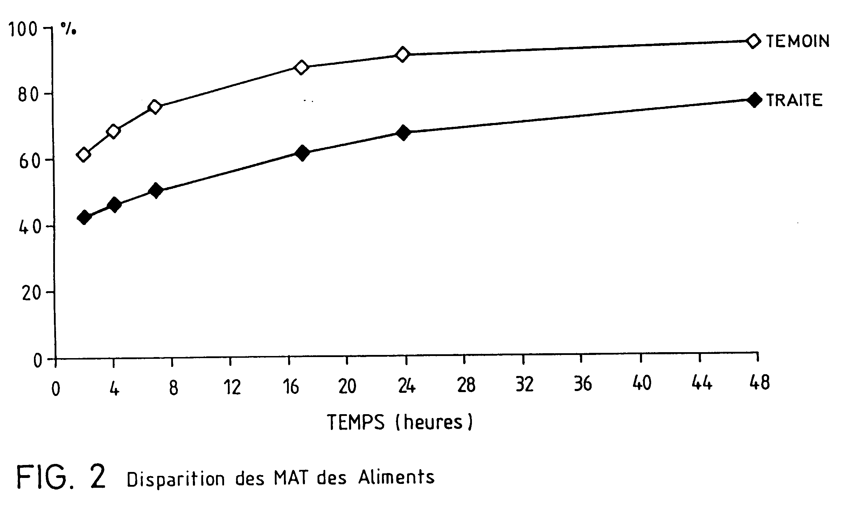

Enfin, la cinétique de la disparition des MAT des aliments est rapportée sur le graphique de la figure 2.

**Revendications**

1.   Procédé pour la protection des protéines alimentaires d'origine végétale de leur dégradation au niveau du rumen des animaux ruminants, caractérisé en ce qu'on traite les matières protéiques d'origine végétale avec de 0,1 à 0,5% en poids d'un mélange de catalyseurs oxydants, en présence de 1 à 5% en poids d'oxyde de calcium, puis qu'on conditionne le produit ainsi obtenu.

2.   Procédé selon la revendication 1, caractérisé par le fait que le mélange de catalyseurs oxydants est à base de sels de Cu, Fe, Mn, Co, Cr et/ou Ni.

3.   Procédé selon la revendication 2, caractérisé par le fait que le mélange de catalyseurs oxydants contient du sulfate et/ou du persulfate de Na ou K.

4.   Procédé selon l'une des revendications 1 à 3, caractérisé par le fait que le mélange de catalyseurs oxydants présente la composition pondérale suivante :

| | |
|---|---|
| $Fe_2O_3$ | 5 - 10% poids |
| $CuSO_45H_2O$ | 5 - 20 |
| $KMnO_4$ | 10 - 40 |
| $K_2Cr_2O_7$ | 5 - 20 |
| $Ni_2O_3$ | 0 - 4 |
| $Na_2SO_4$ | 30 - 50 |
| $Na_2S_2O_8$ | 2 - 6 |
| $Na_2CO_3$ | 20 - 40 |
| $Ca_3(PO_4)_2$ | 10 - 20 |

5.   Procédé selon l'une des revendications 1 à 4, caractérisé par le fait que le traitement est effectué à une température d'environ 80° à 100°C avant conditionnement.

6.   Procédé selon la revendication 5, caractérisé par le fait que la température choisie est obtenue et maintenue par injection de vapeur d'eau sèche.

7.   Aliments pour animaux ruminants contenant des protéines d'origine végétale protégées de leur dégradation au niveau du rumen par le procédé selon l'une des revendications 1 à 6.

**Claims**

1.   A process for protecting edible proteins of vegetable origin from their degradation in the rumen of ruminants, characterized in that the proteinic materials of vegetable origin are treated with 0.1 to 0.5% by weight of a mixture of oxidative catalysts, in the presence of 1 to 5% by weight of calcium oxide, and then the product thus obtained is conditioned.

2. A process according to claim 1, characterized in that the mixture of oxidative catalysts is based on salts of Cu, Fe, Mn, Co, Cr and/or Ni.

3. A process according to claim 2, characterized in that the mixture of oxidative catalysts contains Na or K sulfate and/or persulfate.

4. A process according to one of claims 1 to 3, characterized in that the mixture of oxidative catalysts has the following weight composition :

| $Fe_2O_3$ | 5 - 10 % by weight |
|---|---|
| $CuSO_4.5H_2O$ | 5 - 20 |
| $KMnO_4$ | 10 - 40 |
| $K_2Cr_2O_7$ | 5 - 20 |
| $Ni_2O_3$ | 0 - 4 |
| $Na_2SO_4$ | 30 - 50 |
| $Na_2S_2O_8$ | 2 - 6 |
| $Na_2CO_3$ | 20 - 40 |
| $Ca_3(PO_4)_2$ | 10 - 20 |

5. A process according to one of claims 1 to 4, characterized in that the treatment is carried out at a temperature of about 80° to 100°C, before the conditioning.

6. A process according to claim 5, characterized in that the temperature selected is obtained and maintained by the injection of dry steam.

7. Feed for ruminants containing proteins of vegetable origin protected from their degradation in the rumen by the process according to one of claims 1 to 6.

**Patentansprüche**

1. Verfahren zum Schutz von Futtereiweissen pflanzlichen Ursprungs vor ihrem Abbau im Pansen der Wiederkäuer, dadurch gekennzeichnet, dass man die Eiweissstoffe pflanzlichen Ursprungs in Gegenwart von 1 bis 5 Gewichtsprozent Calciumoxid mit 0,1 bis 0,5 Gewichtsprozent eines Gemischs von oxidierenden Katalysatoren behandelt, dann das so erhaltene Produkt konditioniert.

2. Verfahren gemäss Anspruch 1, dadurch gekennzeichnet, dass das Gemisch von oxidierenden Katalysatoren auf Salzen von Cu, Fe, Mn, Co, Cr und/oder Ni beruht.

3. Verfahren gemäss Anspruch 2, dadurch gekennzeichnet, dass das Gemisch von oxidierenden Katalysatoren Sulfat und/oder Persulfat von Na oder K enthält.

4. Verfahren gemäss einem der Ansprüche 1 bis 3, dadurch gekennzeichnet, dass das Gemisch von oxidierenden Katalysatoren die folgende Gewichtszusammensetzung aufweist:

| $Fe_2O_3$ | 5 - 10 Gew.% |
|---|---|

(suite)

| | |
|---|---|
| $CuSO_4\ 5H_2O$ | 5 - 20 |
| $KMnO_4$ | 10 - 40 |
| $K_2Cr_2O_7$ | 5 - 20 |
| $Ni_2O_3$ | 0 - 4 |
| $Na_2SO_4$ | 30 - 50 |
| $Na_2S_2O_8$ | 2 - 6 |
| $Na_2CO_3$ | 20 - 40 |
| $Ca_3(PO_4)_2$ | 10 - 20 |

5. Verfahren gemäss einem der Ansprüche 1 bis 4, dadurch gekennzeichnet, dass die dem Konditionieren vorausgehende Behandlung bei einer Temperatur von ungefähr 80 bis 100 °C erfolgt.

6. Verfahren gemäss Anspruch 5, dadurch gekennzeichnet, dass die gewählte Temperatur durch Injektion trockenen Wasserdampfs erreicht und aufrechterhalten wird.

7. Wiederkäuerfutter, Eiweisse pflanzlichen Ursprungs enthaltend, die gegen ihren Abbau im Pansen durch das Verfahren gemäss einem der Ansprüche 1 bis 6 geschützt sind.

FIG. 1    Disparition des MAT des Tourteaux

EP 0 588 102 B1

FIG. 2  Disparition des MAT des Aliments

EP 0 588 102 B1